# EUROPEAN PATENT APPLICATION

(11) **EP 3 106 650 A2**
(43) Date of publication of application: **21.12.2016**
(21) Application number: 16172681.5
(22) Date of filing: 02.06.2016
(51) Int. Cl.: F02D 41/00

(54) **CONTROLLER FOR INTERNAL COMBUSTION ENGINE WITH SUPERCHARGER AND CONTROL METHOD THEREFOR**

(30) Priority: 18.06.2015 JP 2015123122
(71) Applicant: Bosch Corporation, Tokyo 150-8360 (JP)
(72) Inventor: GOTO, Junji, Higashimatsuyama-shi, Saitama 3558603 (JP); NOGUCHI, Ken, Higashimatsuyama-shi, Saitama 3558603 (JP)
(74) Representative: Isarpatent

(57) **Abstract**

A target valve opening degree setting section for setting a target valve opening degree of an exhaust flow rate adjusting valve on the basis of an operation state of an internal combustion engine; a valve drive section for driving the exhaust flow rate adjusting valve such that an actual valve opening degree of the exhaust flow rate adjusting valve follows the target valve opening degree; and a speed determination section for determining whether a speed increase rate of the internal combustion engine exceeds a threshold value are provided. In the case where the speed increase rate exceeds the threshold value, the target valve opening degree setting section changes a closing direction limit value in an opening direction and sets the target valve opening degree of the exhaust flow rate adjusting valve on the basis of the operation state of the internal combustion engine.

## Description

### BACKGROUND OF THE INVENTION

### 1. Field of the Invention

The invention relates to a controller for an internal combustion engine with a supercharger mounted in a vehicle or the like and a control method therefor.

### 2. Description of the Related Art

A supercharger of a so-called turbocharger type has widely been used to improve thermal efficiency of an internal combustion engine. In such a supercharger of the turbocharger type, in order to control supercharging pressure, a waste gate valve that causes exhaust gas flowing through a turbine to bypass, a variable nozzle turbo valve that changes an exhaust gas pass-through area of the turbine, and the like are provided in an exhaust route, and the turbine's workload is changed in accordance with opening degrees of these valves.

For example, it is described in Patent Document 1 that the supercharging pressure is controlled by changing opening degrees of various valves as adjusting elements on the basis of a physical equation (model) of the supercharger.

Patent Document 1: JP-T-2005-504210

### SUMMARY OF THE INVENTION

In a conventional supercharging pressure control system as in the invention described in above Patent Document 1 and the like, the supercharging pressure is controlled by changing an opening degree of an exhaust flow rate adjusting valve, such as the above-described waste gate valve. However, an influence of a delay time, during which an actual opening degree of the exhaust flow rate adjusting valve is increased to a target opening degree, on exhaust pressure becomes significant in a transitional operation in which an engine speed is rapidly increased, such as a kickdown in which an accelerator pedal is abruptly depressed for a downshift in an automobile equipped with an automatic transmission (AT), traveling at a low gear, and acceleration during a tire slip. That is, the exhaust pressure on an upstream side of the turbine of the supercharger is possibly increased due to the delay time. When the exhaust pressure on the upstream side of the turbine is increased just as described, the exhaust pressure possibly exceeds an upper limit value that is permitted by hardware (a hardware limit). To handle such a problem, a limit value (a limit) of the opening degree of the exhaust flow rate adjusting valve in a closing direction is set to be further on an opening side. In this way, the exhaust pressure can be prevented from exceeding the upper limit value that is permitted by the hardware. However, such a problem is raised that this leads to degraded responsiveness of the supercharging pressure, lowering of the supercharging pressure that can be reached during a normal operation, and degradation of responsiveness (drivability) and engine performance.

The invention has been made in view of the above-described problem, and therefore has a purpose of providing a controller for an internal combustion engine with a supercharger and a control method therefor capable of suppressing exhaust pressure in an exhaust route to be at most equal to an upper limit value without sacrificing responsiveness and following performance of the supercharging pressure in the internal combustion engine with the supercharger.

In order to solve the above-described conventional problem, the invention has following means.

In a controller for an internal combustion engine with a supercharger for driving a turbine by using exhaust gas that flows through an exhaust route of the internal combustion engine and supercharging air that flows through an intake route to the internal combustion engine by a compressor coupled to said turbine, the invention includes: a target valve opening degree setting section for setting a target valve opening degree of an exhaust flow rate adjusting valve that adjusts a flow rate of the exhaust gas flowing through the exhaust route within a specified opening degree range on the basis of an operation state of the internal combustion engine; a valve drive section for controlling supercharging pressure that causes the air to be supercharged to the internal combustion engine by driving the exhaust flow rate adjusting valve such that an actual valve opening degree of the exhaust flow rate adjusting valve follows the set target valve opening degree; and a speed determination section for determining whether a speed increase rate, at which a speed of the internal combustion engine increases, exceeds a threshold value, and, in the case where the speed increase rate exceeds the threshold value, the target valve opening degree setting section changes a closing direction limit value within the specified opening degree range in an opening direction and sets the target valve opening degree of the exhaust flow rate adjusting valve within a changed opening degree range on the basis of the operation state of the internal combustion engine.

In the invention, the closing direction limit value is a limit value of an opening degree at which the exhaust flow rate adjusting valve can be closed. According to the invention, such a delay characteristic that the actual valve opening degree of the exhaust flow rate adjusting valve follows a change in the target valve opening degree thereof in a delayed manner in terms of time is taken into consideration. Accordingly, in the case where the speed increase rate exceeds the threshold value, based on such concern that exhaust pressure possibly exceeds a specified permitted value, the closing direction limit value of the target valve opening degree is changed in the opening direction. That is, the closing direction limit value of the target valve opening degree, which is related to the exhaust flow rate adjusting valve, is changed in the opening direction only in the case where the exhaust pressure possibly exceeds the specified permitted value. In this way, the exhaust flow rate adjusting valve is driven such that the actual valve opening degree thereof is changed to the opening side further quickly, and an increase in the exhaust pressure can thereby be suppressed.

As described above, the closing direction limit value of the target valve opening degree of the exhaust flow rate adjusting valve is changed in the opening direction only in the case where the speed increase rate exceeds the threshold value. Then, the exhaust flow rate adjusting valve is driven such that the actual valve opening degree thereof follows the target valve opening degree that is set to be on a relatively opening side. In this way, the exhaust pressure in the exhaust route can be suppressed to be at most equal to the specified limit value without degrading responsiveness and following performance of a supercharging pressure control system for controlling the supercharging pressure.

In addition, a preferred aspect of the invention further includes a fuel injection amount determination section for determining whether a fuel injection amount exceeds a threshold value, and, in the cases where the speed increase rate exceeds the threshold value and the fuel injection amount exceeds the threshold value, the target valve opening degree setting section changes the closing direction limit value within the specified opening degree range in the opening direction and sets the target valve opening degree of the exhaust flow rate adjusting valve within a changed opening degree range on the basis of the operation state of the internal combustion engine.

Furthermore, another preferred aspect of the invention further includes an exhaust pressure determination section for determining whether exhaust pressure on an upstream side of the turbine exceeds a specified value, and, in the cases where the speed increase rate exceeds the threshold value and the exhaust pressure on the upstream side of the turbine exceeds the specified value, the target valve opening degree setting section changes the closing direction limit value within the specified opening degree range in the opening direction and sets the target valve opening degree of the exhaust flow rate adjusting valve within a changed opening degree range.

The invention as described so far can also be regarded as a control method for an internal combustion engine with a supercharger.

According to the invention, the exhaust pressure in the exhaust route can be suppressed to be at most equal to the specified upper limit value without degrading responsiveness and following performance of a supercharging pressure control system for controlling the supercharging pressure in the internal combustion engine with the supercharger.

### BRIEF DESCRIPTION OF THE DRAWINGS

Fig. 1 is a view that depicts an overall configuration of an engine control system in which a controller for an internal combustion engine with a supercharger is embedded, the invention being applied to the controller;
Fig. 2 is a view for explaining a processing section that constitutes an engine control unit;
Fig. 3 is a flowchart for explaining a processing flow that is executed by the engine control unit;
Figs. 4A to 4D include charts that depict various time responses at a time when supercharging pressure is controlled by a supercharging pressure control section 110 in a state where a closing direction limit value of a valve opening degree is fixed to a first closing direction limit value;
Fig. 5A to Fig.5D include charts that depict various time responses in an example in which a closing direction limit value of a target valve opening degree is set to be variable; and
Fig. 6A to Fig.6D include charts that depict various time responses in another example in which the closing direction limit value of the target valve opening degree is set to be variable.

### DETAILED DESCRIPTION OF THE INVENTION

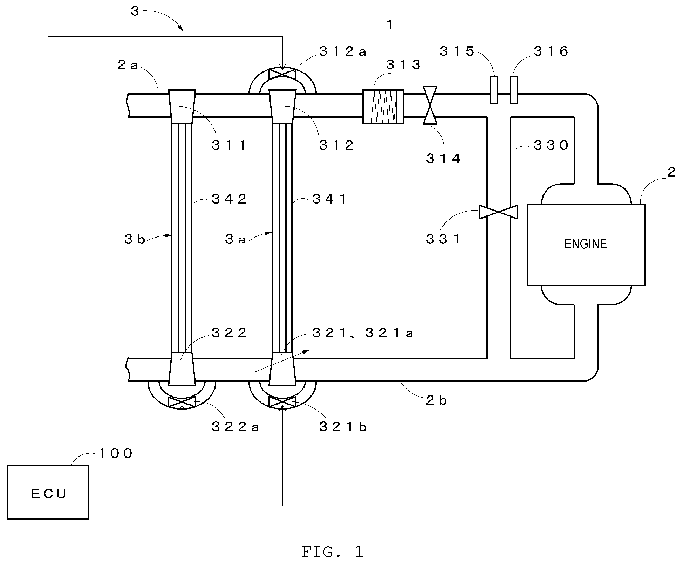

A description will be made on a mode for carrying out the invention (hereinafter referred to as this embodiment) by illustrating a specific example. This embodiment relates to a controller for an internal combustion engine with a supercharger that is mounted in a vehicle or the like. More specifically, the controller is embedded in an engine control system 1 as depicted in Fig. 1, for example. A description will hereinafter be made on a configuration of the engine control system 1 and an operation thereof by focusing attention on supercharging pressure control for controlling supercharging pressure of the air to be supercharged in an engine 2 with reference to Fig. 1.

### 1. Engine control system

As depicted in Fig. 1, the engine control system 1 includes the engine 2, a turbocharger 3, and an engine control unit 100 (hereinafter referred to as an ECU 100).

The engine 2 is the internal combustion engine according to the invention and is, for example, a reciprocating engine, such as a diesel engine that uses diesel fuel as a power source or a gasoline engine that uses gasoline fuel as the power source. More specifically, the engine 2 suctions ambient air (the air) from an intake pipe 2a that is an intake route connected to an ambient air inlet, combusts fuel, and thereby generates power. Then, the engine 2 discharges exhaust gas after combustion to an exhaust pipe 2b as an exhaust route. In the following description, the engine 2 is the diesel engine.

The turbocharger 3 is a supercharger that supercharges the air to the engine 2, and is, for example, a two-stage turbocharger in which a high-pressure stage turbocharger 3a and a low-pressure stage turbocharger 3b as depicted in Fig. 1 are connected in series. More specifically, the turbocharger 3 includes, from an upstream side to a downstream side (the engine 2 side) of the intake pipe 2a, a low-pressure stage compressor 311, a high-pressure stage compressor 312, an intercooler 313, a throttle valve 314, a supercharging pressure sensor 315, and a temperature sensor 316. In addition, the turbocharger 3 includes, from an upstream side (the engine 2 side) to a downstream side of the exhaust pipe 2b, a high-pressure stage turbine 321 and a low-pressure stage turbine 322.

In addition, the engine control system 1 is provided with an exhaust gas recirculation (EGR) route 330 for a purpose of reducing NOx and the like in the exhaust gas. More specifically, the EGR route 330 is a route through which the exhaust gas is circulated from an exhaust port of the engine 2 to an intake port of the engine 2, and is provided with an EGR valve 331 for adjusting a circulation amount of the exhaust gas.

The high-pressure stage compressor 312 and the high-pressure stage turbine 321 are mechanically coupled to each other via a bearing section 341 for supporting these on the same rotary shaft, and constitute the high-pressure stage turbocharger 3a that causes the high-pressure stage compressor 312 to rotate by using rotational energy of the high-pressure stage turbine 321 and supercharges the air to the engine 2. Here, the high-pressure stage compressor 312 is provided with a compressor bypass valve 312a that adjusts an amount of the air flowing through a bypass route of the compressor. In addition, the high-pressure stage turbine 321 is provided with: a variable nozzle turbo valve 321a that changes an exhaust gas pass-through area of said turbine; and a high-pressure stage waste gate valve 321b that adjusts an amount of the air flowing through a bypass route of said turbine.

The low-pressure stage compressor 311 and the low-pressure stage turbine 322 are mechanically coupled to each other via a bearing section 342 for supporting these on the same rotary shaft, and constitute the low-pressure stage turbocharger 3b that causes the low-pressure stage compressor 311 to rotate by using rotational energy of the low-pressure stage turbine 322 and supercharges the air to the engine 2. Here, the low-pressure stage turbine 322 is provided with a low-pressure stage waste gate valve 322a that adjusts an amount of the air flowing through a bypass route of the turbine.

The supercharging pressure sensor 315 is a pressure sensor that is provided in the intake route from the high-pressure stage compressor 312 to the engine 2, detects pressure of the air that is supercharged to the engine 2 (supercharging pressure), and notifies the ECU 100 of detected supercharging pressure (actual supercharging pressure).

The temperature sensor 316 is a temperature sensor that is provided in the intake route from the high-pressure stage compressor 312 to the engine 2, detects a temperature of the air that is supercharged to the engine 2, and notifies the ECU 100 of a detected temperature.

In the turbocharger 3 that is configured as described so far, a further large amount of the air can be delivered to the engine 2 when each of the high-pressure stage turbocharger 3a and the low-pressure stage turbocharger 3b is operated.

The ECU 100 is a microcomputer that is constructed of an input/output device, an arithmetic unit for performing various types of arithmetic processing, a main memory for temporarily storing arithmetic processing data, and a storage device for storing arithmetic programs, and realizes processing as follows when a control program for controlling the engine control system 1 is installed in the storage device. That is, the ECU 100 controls operations of the engine 2 and the turbocharger 3 by adjusting a fuel injection amount injected in the engine 2 and opening degrees of various valves and the throttle provided in the turbocharger 3 on the basis of operation information by a driver, such as an accelerator pedal position, and detection information from various sensors. That is, the controller for the internal combustion engine with the supercharger, to which the invention is applied, is realized as one function of the ECU 100.

Note that the ECU 100 is not limited to the above-described microprocessor but may be dedicated hardware, such as a programmable logic device, that is designed to control the engine control system 1.

### 2. Controller for internal combustion engine with supercharger

### (Overall configuration)

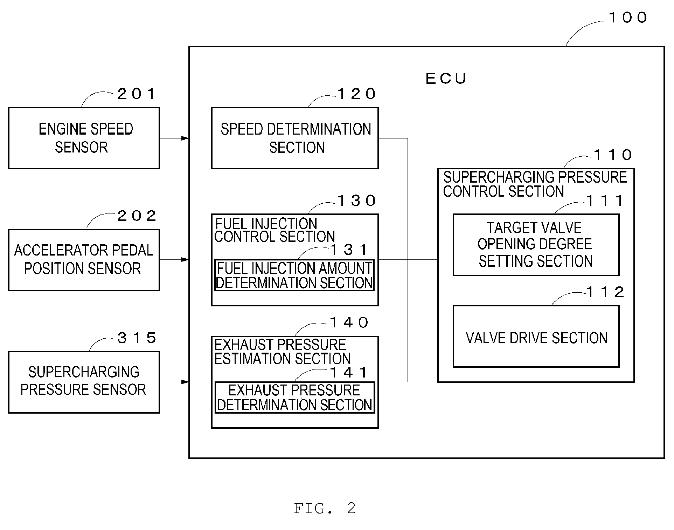

Next, an internal configuration of the ECU 100 will specifically be described with reference to Fig. 2.

The ECU 100 includes: a supercharging pressure control section 110 for controlling the supercharging pressure that causes the air to be supercharged to the engine 2; a speed determination section 120 for determining a variation in a speed of the engine 2; a fuel injection control section 130 for controlling the fuel injection amount that is injected to the engine 2 and injection timing; and an exhaust pressure estimation section 140 for estimating the exhaust pressure.

In order to control the supercharging pressure of the engine 2 in accordance with an opening degree of an exhaust flow rate adjusting valve that adjusts a flow rate of the exhaust gas flowing through the exhaust route, as depicted in Fig. 2, the supercharging pressure control section 110 has a target valve opening degree setting section 111 and a valve drive section 112. Here, the exhaust flow rate adjusting valve corresponds to each of the variable nozzle turbo valve 321a, the high-pressure stage waste gate valve 321b, and the low-pressure stage waste gate valve 322a in the above-described turbocharger 3.

The target valve opening degree setting section 111 sets a target value of the supercharging pressure (target supercharging pressure) on the basis of information on an operation state, such as accelerator pedal position information from an accelerator pedal position sensor 202, the fuel injection amount by the fuel injection control section 130, and the speed from an engine speed sensor 201. Then, the target valve opening degree setting section 111 sets a target value of the opening degree of the exhaust flow rate adjusting valve (hereinafter, referred to as a target valve opening degree) on the basis of physical equations, such as a throttle equation of the valve and a conversion efficiency equation of the turbine and the compressor, such that the actual supercharging pressure becomes the target supercharging pressure.

A limit value on a closing side (a closing direction limit value) is determined for the target valve opening degree so as to prevent the exhaust pressure from exceeding an upper limit value that is permitted by hardware. That is, the target valve opening degree setting section 111 changes the target valve opening degree of the exhaust flow rate adjusting valve within a specified opening degree range.

The valve drive section 112 drives the exhaust flow rate adjusting valve such that an actual valve opening degree of the exhaust flow rate adjusting valve follows the target valve opening degree thereof that is set by the target valve opening degree setting section 111, and thereby controls the supercharging pressure. More specifically, in the case where the exhaust flow rate adjusting valve is a solenoid-type valve, an opening degree of which can be changed in accordance with a current level, the valve drive section 112 outputs a drive current that corresponds to a change in the target valve opening degree to a coil of the exhaust flow rate adjusting valve, causes the drive current to flow thereinto, and thereby changes the actual opening degree of the exhaust flow rate adjusting valve. The actual opening degree of the exhaust flow rate adjusting valve follows the target valve opening degree thereof in correspondence with a change in the drive current.

In the supercharging pressure control section 110 that is configured as described so far, in accordance with three types of load regions that are divided by a load (the speed) of the engine 2, the target valve opening degree is set for one (hereinafter also referred to as a variable opening degree subject valve) of the above-described three exhaust flow rate adjusting valves in a state where the opening degrees of the other two exhaust flow rate adjusting valves are fixed to either full opening or full closing. Then, the variable opening degree subject valve is driven such that the actual opening degree thereof follows the target valve opening degree.

First, in the low load region where an amount of the exhaust gas is small, the supercharging pressure control section 110 drives the variable nozzle turbo valve 321a as the variable opening degree subject valve in a state where the high-pressure stage waste gate valve 321b and the low-pressure stage waste gate valve 322a are fixed to full closing, and thereby controls the supercharging pressure. Next, in the middle load region where the speed of the engine 2 is increased and the amount of the exhaust gas is increased from that in the low load region, the supercharging pressure control section 110 drives the high-pressure stage waste gate valve 321b as the variable opening degree subject valve in a state where the variable nozzle turbo valve 321a is fixed to full opening and the low-pressure stage waste gate valve 322a is fixed to full closing, and thereby controls the supercharging pressure. In the high load region where the speed of the engine 2 is further increased and the amount of the exhaust gas is further increased from that in the middle load region, the supercharging pressure control section 110 drives the low-pressure stage waste gate valve 322a as the variable opening degree subject valve in a state where the variable nozzle turbo valve 321a and the high-pressure stage waste gate valve 321b are fixed to full opening, and thereby controls the supercharging pressure.

The speed determination section 120 computes a speed increase rate [rpm/sec], at which the engine speed is increased per unit time (for example, one second), by using a detection result from the engine speed sensor 201 and determines whether the computed speed increase rate exceeds a threshold value. The target valve opening degree setting section 111 is notified of the determination result.

The fuel injection control section 130 controls the fuel injection amount that is injected to the engine 2 and the injection timing in accordance with the information such as the engine speed detected by the engine speed sensor 201 and the accelerator pedal position detected by the accelerator pedal position sensor 202.

In addition, the fuel injection control section 130 has a fuel injection amount determination section 131 that determines a variation in the fuel injection amount. More specifically, the fuel injection amount determination section 131 determines whether the fuel injection amount exceeds a threshold value. The target valve opening degree setting section 111 is notified of the determination result.

The exhaust pressure estimation section 140 computes an estimation value [hPa] of the exhaust pressure on an upstream side of the high-pressure stage turbine 321, more specifically, an estimation value of the exhaust pressure near the exhaust port of the engine 2 on the basis of a physical model of the engine control system 1 that is expressed by the physical equations, such as the throttle equation of the valve and the conversion efficiency equation of the turbine and the compressor, and detection values of the various sensors. In addition, the exhaust pressure estimation section 140 has an exhaust pressure determination section 141 that determines a variation in the exhaust pressure. More specifically, the exhaust pressure determination section 141 determines whether the estimation value of the exhaust pressure exceeds a specified value that is set to be lower than the permitted value by the hardware. For example, in the case where the exhaust pressure exceeds the specified value, it can be determined that the exhaust pressure is increased to such a degree that the exhaust pressure approximates the permitted value by the hardware. The target valve opening degree setting section 111 is notified of the determination result.

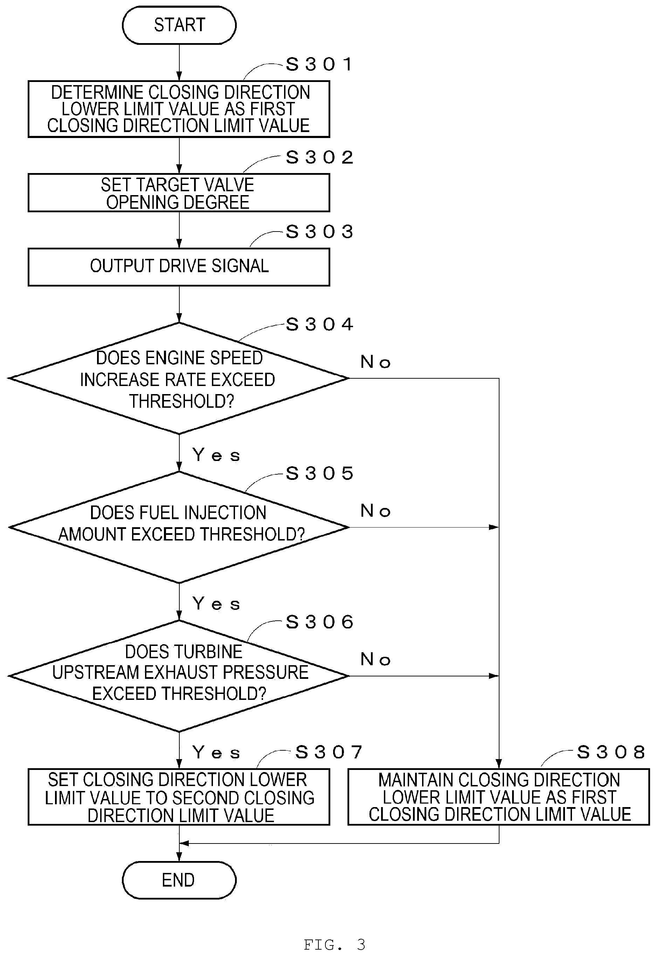

The ECU 100 that has the configuration as described so far controls the supercharging pressure in accordance with a flowchart like one depicted in Fig. 3, for example, and the target valve opening degree setting section 111 changes the closing direction limit value of the target valve opening degree of the exhaust flow rate adjusting valve on the basis of the determination results of the speed determination section 120, the fuel injection amount determination section 131, and the exhaust pressure determination section 141.

In step S301, the target valve opening degree setting section 111 determines a closing direction lower limit value of the target valve opening degree to be a first closing direction limit value, and the process proceeds to step S302. Here, the first closing direction limit value is a value on the closing side from a second closing direction limit value, which will be described below.

In step S302, the target valve opening degree setting section 111 sets the target valve opening degree of the exhaust flow rate adjusting valve within an opening degree range that is at most equal to the first closing direction limit value on the basis of the operation state of the engine 2, and the process proceeds to step S303.

In step S303, the valve drive section 112 changes the drive current and outputs the drive current to the exhaust flow rate adjusting valve in a manner to follow the target valve opening degree that is set in step S302, and the process proceeds to step S304.

In step S304, the speed determination section 120 determines whether the engine speed increase rate exceeds the threshold value. If the engine speed increase rate exceeds the threshold value (S304: Yes), the process proceeds to step S305. On the other hand, if the engine speed increase rate does not exceed the threshold value (S304: No), that is, if the engine speed increase rate is at most equal to the threshold value, the process skips step S305 to step S307 and proceeds to step S308.

In step S305, the fuel injection amount determination section 131 determines whether the fuel injection amount exceeds the threshold value. If the fuel injection amount exceeds the threshold value (S305: Yes), the process proceeds to step S306. On the other hand, if the fuel injection amount does not exceed the threshold value (S305: No), that is, if the fuel injection amount is at most equal to the threshold value, the process skips step S306 to step S307 and proceeds to step S308.

In step S306, the exhaust pressure determination section 141 determines whether the estimation value of the exhaust pressure that is estimated by the exhaust pressure estimation section 140 exceeds a threshold value. If the estimation value of the exhaust pressure exceeds the threshold value (S306: Yes), the process proceeds to step S307. On the other hand, if the estimation value of the exhaust pressure does not exceed the threshold value (S306: No), that is, if the estimation value of the exhaust pressure is at most equal to the threshold value (S306: No), the process does not proceed to step S307 but proceeds to step S308.

In step S307, the target valve opening degree setting section 111 changes the closing direction limit value of the target valve opening degree from the first closing direction limit value to the second closing direction limit value, and the processing depicted in Fig. 3 is terminated. Here, the second closing direction limit value is the valve opening limit value on the valve closing side as described above and is a value on an opening side from the first closing direction limit value. That is, the target valve opening degree setting section 111 changes the closing direction limit value of the target valve opening degree to the second closing direction limit value and thereby sets the target valve opening degree within the opening degree range that is limited to the opening side in comparison with that in a case where the closing direction limit value of the target valve opening degree is set to the first closing direction limit value.

In step S308, the target valve opening degree setting section 111 does not change the closing direction limit value of the target valve opening degree to the second closing direction limit value but maintains the closing direction limit value of the target valve opening degree at the first closing direction limit value, and the processing depicted in Fig. 3 is terminated. That is, the target valve opening degree setting section 111 maintains the closing direction limit value of the target valve opening degree at the first closing direction limit value and thereby sets the target valve opening degree within the range in the closing direction in comparison with that in the case where the closing direction limit value of the target valve opening degree is set to the second closing direction limit value.

According to the processing depicted in Fig. 3 above, if step S304 to step S305 are satisfied, it is considered that pressure of the exhaust gas in the exhaust route possibly exceeds a specified upper limit value, and the process proceeds to step S306. Furthermore, if the exhaust pressure exceeds the specified value in step S306, the process proceeds to step S307, and the target valve opening degree setting section 111 changes the closing direction limit value of the target valve opening degree of the exhaust flow rate adjusting valve from the first closing direction limit value to the second closing direction limit value. That is, according to the processing depicted in Fig. 3 above, only if it is considered that the pressure of the exhaust gas in the exhaust route possibly exceeds the specified upper limit value, the closing direction limit value of the target valve opening degree of the exhaust flow rate adjusting valve is changed in the opening direction. Note that a change from the first closing direction limit value to the second closing direction limit value may be made stepwise or may be made gradually in a time-axis direction.

As described above, the closing direction limit value of the target valve opening degree of the exhaust flow rate adjusting valve is changed in the opening direction only when a specified condition is satisfied. In this way, compared to a case where the closing direction limit value of the target valve opening degree is fixed, as a comparative example, the exhaust pressure in the exhaust route can be suppressed to be at most equal to the specified upper limit value without degrading responsiveness and following performance of a supercharging pressure control system for controlling the supercharging pressure.

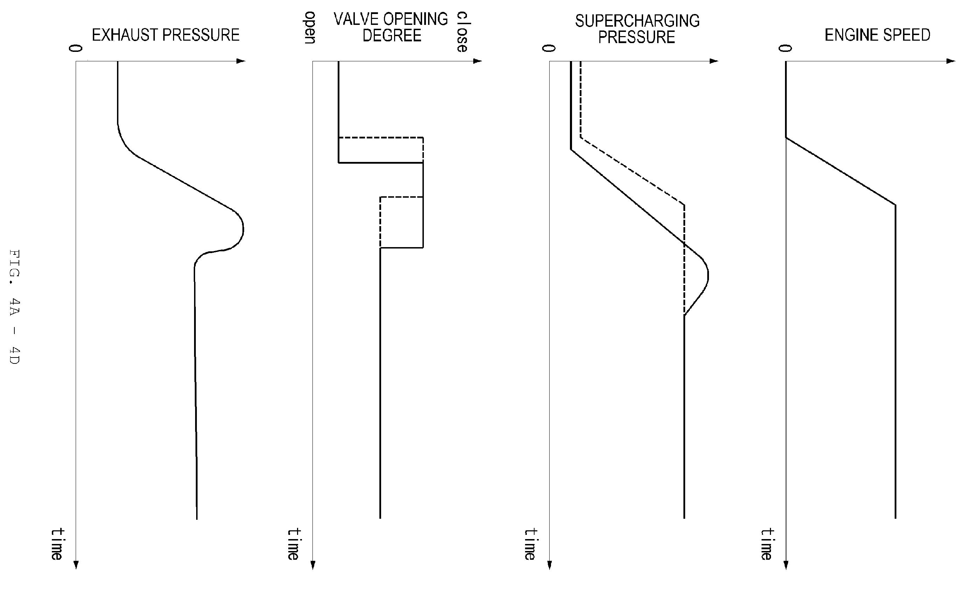

Figs. 4A to 4D include charts that depict various time responses at a time when the supercharging pressure is controlled by the supercharging pressure control section 110 in a state where the closing direction limit value of the target valve opening degree is fixed to the first closing direction limit value. More specifically, Fig. 4A depicts a time response of the engine speed, and an upper side of a vertical axis indicates that the speed is high. Fig. 4B depicts time responses of the target supercharging pressure (a broken line) and the actual supercharging pressure (a solid line), and an upper side of a vertical axis indicates that the supercharging pressure is high. In addition, Fig. 4C depicts time responses of the target valve opening degree (a broken line) and the actual valve opening degree (a solid line) that is changed in a manner to follow the target valve opening degree, a lower side of a vertical axis indicates an opening side (open) of the valve, and an upper side of the vertical axis indicates a closing side (close) of the valve. Fig. 4D depicts time responses of the permitted value (a broken line) and an actually measured value (a solid line) of the exhaust pressure on the upstream side of the high-pressure stage turbine 321, and an upper side of a vertical axis indicates that the exhaust pressure is high.

As it is obvious from Fig. 4A to Fig. 4D, the actual valve opening degree is changed in the delayed manner with respect to a change in the target valve opening degree. Accordingly, even in a state where the exhaust pressure on the upstream side of the high-pressure stage turbine 321 is high, the actual valve opening degree stays on the closing side for a relatively long time. As a result, the exhaust pressure is increased and undesirably exceeds the permitted value by the hardware.

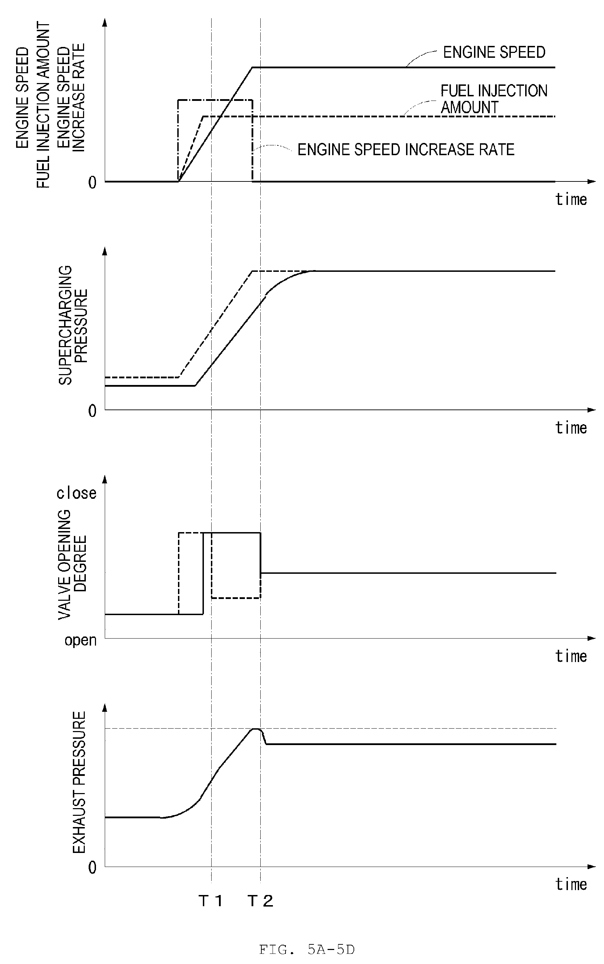

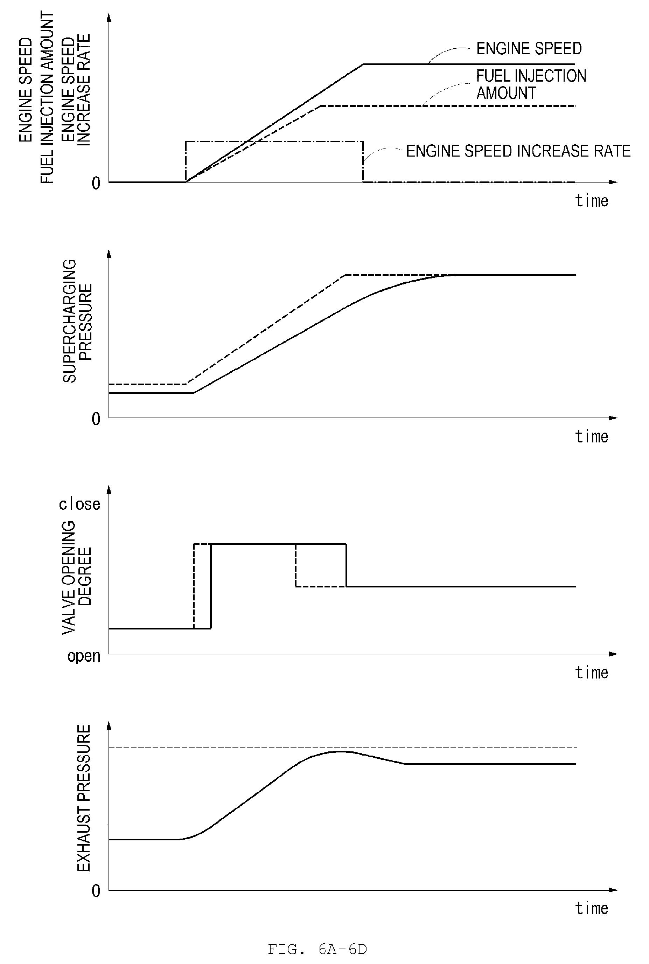

Next, a description will be made on time responses in an example in which the closing direction limit value of the target valve opening degree is set to be variable by the processing depicted in Fig. 3 above with reference to Fig. 5A to Fig.5D and Fig. 6A to Fig.6D.

Fig. 5A to Fig.5D include time responses in the case where the first closing direction limit value is changed to the second closing direction limit value from a time point T1 to a time point T2. More specifically, Fig. 5A depicts time responses of the engine speed (a solid line), the engine speed increase rate (a one-dot chain line), and the fuel injection amount (a broken line), and an upper side of a vertical axis indicates that various values are high. Fig. 5B depicts time responses of the target supercharging pressure (a broken line) and the actual supercharging pressure (a solid line), and an upper side of a vertical axis indicates that the supercharging pressure is high. In addition, Fig. 5C depicts time responses of the target valve opening degree (a broken line) and the actual valve opening degree (a solid line) that is changed in a manner to follow the target valve opening degree, a lower side of a vertical axis indicates the opening side (open) of the valve, and an upper side of the vertical axis indicates the closing side (close) of the valve. Fig. 5D depicts time responses of the permitted value (a broken line) and the actually measured value (a solid line) of the exhaust pressure on the upstream side of the high-pressure stage turbine 321, and an upper side of a vertical axis indicates that the exhaust pressure is high.

As it is obvious from Fig. 5A to Fig. 5D, in this example, in the case where each of the engine speed increase rate, the fuel injection amount, and the estimation value of the exhaust pressure is higher than the threshold value in a period from the time point T1 to the time point T2, it is assumed to be in a rapid transitional state, and the closing direction limit value of the target valve opening degree is changed to the opening side. By changing the closing direction limit value to the opening side, just as described, the actual valve opening degree is quickly changed to the opening side in comparison with that in the comparative example, which has been described by using Fig. 4A to Fig.4D, for example. Accordingly, the pressure on the upstream side of the high-pressure stage turbine 321 is lowered to the permitted value.

Meanwhile, Fig. 6A to Fig.6D depict time responses in the case where the process proceeds to step S308 and the closing direction limit value is maintained at the first closing direction limit value without being in the rapid transitional state. Fig. 6A depicts time responses of the engine speed (a solid line), the engine speed increase rate (a one-dot chain line), and the fuel injection amount (a broken line), and an upper side of a vertical axis indicates that various values are high. Fig. 6B depicts time responses of the target supercharging pressure (a broken line) and the actual supercharging pressure (a solid line), and an upper side of a vertical axis indicates that the supercharging pressure is high. In addition, Fig. 6C depicts time responses of the target valve opening degree (a broken line) and the actual valve opening degree (a solid line) that is changed in a manner to follow the target valve opening degree, a lower side of a vertical axis indicates the opening side (open) of the valve, and an upper side of the vertical axis indicates the closing side (close) of the valve. Fig. 6D depicts time responses of the permitted value (a broken line) and the actually measured value (a solid line) of the exhaust pressure on the upstream side of the high-pressure stage turbine 321, and an upper side of a vertical axis indicates that the exhaust pressure is high.

As it is obvious from Fig. 6A to Fig. 6D, in the case where at least one parameter among the engine speed increase rate, the fuel injection amount, and the estimation value of the exhaust pressure is smaller than the threshold value, it is considered not to be in the rapid transitional state but to be in a normal transitional state, and the closing direction limit value of the target valve opening degree is maintained at the first closing direction limit value. That is, in a normal transitional time, it is considered that an increase in the turbine upstream pressure that corresponds to an opening delay of the actual valve opening degree with respect to the target valve opening degree is limited, and the closing direction limit value of the target valve opening degree is maintained at the first closing direction limit value. Just as described, in the case where the pressure on the upstream side of the high-pressure stage turbine 321 is far from the permitted value by the hardware, the target valve opening degree is not limited by the second closing direction limit value. In this way, following failure of the actual supercharging pressure with respect to the target supercharging pressure can be prevented. That is, it is possible to prevent occurrence of the following failure of the actual supercharging pressure with respect to the target supercharging pressure, which is caused by unnecessarily limiting the closing direction limit value to the opening side.

As it has been described so far, in the ECU 100 that executes the processing depicted in Fig. 3 above, such a temporal characteristic that the actual valve opening degree of the exhaust flow rate adjusting valve follows the change in the target valve opening degree thereof in the delayed manner in terms of time is taken into consideration. Accordingly, when the speed increase rate exceeds the threshold value, as in a case of the rapid transitional state as depicted from the time points T1 to T2 in Fig. 5A to Fig.5D, the exhaust pressure possibly exceeds the specified permitted value. Thus, the closing direction limit value of the target valve opening degree is changed to the opening direction. That is, the closing direction limit value of the target valve opening degree, which is related to the exhaust flow rate adjusting valve, is changed in the opening direction only in the case where the exhaust pressure possibly exceeds the specified permitted value. In this way, the exhaust flow rate adjusting valve is driven such that the actual valve opening degree is changed to the opening side further quickly, and the increase in the exhaust pressure can thereby be suppressed.

Note that, if the condition of step S304 is satisfied in the processing depicted in Fig. 3, the process may skip steps S305 to S306 and proceed to step S307. That is, in the case where the engine speed increase rate exceeds the threshold value, the exhaust pressure possibly exceeds the specified permitted value. Accordingly, regarding the target valve opening degree, such a change may be made that the supercharging pressure is controlled by changing the closing direction limit value within the specified opening degree range in the opening direction.

The change can be made as described above, and it is particularly preferred to execute the determination processing in steps S305 and S306. This is because it is possible to suppress the unnecessary change of the closing direction limit value to the opening side in the case where the exhaust pressure does not normally exceed the permitted value and to prevent degradation of the responsiveness and the following performance of the supercharging pressure control system.

In addition, in the example depicted in above-described Fig. 5B, the closing direction limit value is switched stepwise from the first closing direction limit value to the second closing direction limit value with the time point T1 being a boundary. However, the stepwise change may appropriately be filtered, and the closing direction limit value may moderately be changed. Similarly, the closing direction limit value is switched stepwise from the second closing direction limit value to the first closing direction limit value with the time point T2 being a boundary. However, the stepwise change may appropriately be filtered, and the closing direction limit value may moderately be changed. By moderately changing the closing direction limit value, just as described, it is possible to prevent rapid unnecessary variations in the closing direction limit value, which are caused by noise or disturbance. In this way, the supercharging pressure control with a noise resistant or disturbance resistance characteristic, in other words, the robust supercharging pressure control can be realized.

### 3. Others

Note that the actual supercharging pressure is not limited to the value that is detected by the above-described supercharging pressure sensor 315, but a value that is estimated from the values of the various sensors provided in the engine control system 1. In addition, the supercharger, to which the invention is applied, is not limited to the two-stage turbocharger 3 as described above. The invention can also be applied to a single unit of the supercharger.

Furthermore, the invention may be realized by providing a non-temporary recording medium, in which an engine control program that realizes the functions of the above-described embodiment is recorded, in the ECU and causing a processing unit (a CPU, a MPU) of the ECU to read out and execute the engine control program that is recorded in the recording medium.

In this case, the engine control program that is read out from the non-temporary recording medium realizes the functions of the above-described embodiment. Thus, the engine control program and the non-temporary recording medium, in which this program is recorded, are also one aspect of the invention.

As the non-temporary recording medium that provides the engine control program, for example, a flexible disc, a hard disc, a magnet-optical disc, an optical disc such as a CD-ROM, a CD-R, a CD-RW, a DVD-ROM, a DVD-RAM, a DVD-RW, and a DVD+RW, a magnetic tape, a non-volatile memory card, and a ROM are included. Alternatively, the program may be downloadable via a communication network.

The invention has been described with reference to the typical embodiment. It is needless to say that the invention is not limited to the typical aspect disclosed herein. The claims can be interpreted in the broadest manner so as to include all of such changes as well as equivalent structures and functions.

## Claims

1. A controller for an internal combustion engine with a supercharger for driving a turbine by using exhaust gas that flows through an exhaust route of the internal combustion engine and supercharging air that flows through an intake route to the internal combustion engine by a compressor coupled to said turbine, the controller for the internal combustion engine with the supercharger comprising:
a target valve opening degree setting section for setting a target valve opening degree of an exhaust flow rate adjusting valve that adjusts a flow rate of the exhaust gas flowing through the exhaust route within a specified opening degree range on the basis of an operation state of the internal combustion engine;
a valve drive section for controlling supercharging pressure that causes the air to be supercharged to the internal combustion engine by driving the exhaust flow rate adjusting valve such that an actual valve opening degree of the exhaust flow rate adjusting valve follows the set target valve opening degree; and
a speed determination section for determining whether a speed increase rate, at which a speed of the internal combustion engine increases, exceeds a threshold value, wherein
in the case where the speed increase rate exceeds the threshold value, the target valve opening degree setting section changes a closing direction limit value within the specified opening degree range in an opening direction and sets the target valve opening degree of the exhaust flow rate adjusting valve within a changed opening degree range on the basis of the operation state of the internal combustion engine.

2. The controller for the internal combustion engine with the supercharger according to claim 1 further comprising:
a fuel injection amount determination section for determining whether a fuel injection amount exceeds a threshold value, wherein
in the cases where the speed increase rate exceeds the threshold value and the fuel injection amount exceeds the threshold value, the target valve opening degree setting section changes the closing direction limit value within the specified opening degree range in the opening direction and sets the target valve opening degree of the exhaust flow rate adjusting valve within a changed opening degree range on the basis of the operation state of the internal combustion engine.

3. The controller for the internal combustion engine with the supercharger according to claim 1 or 2 further comprising:
an exhaust pressure determination section for determining whether exhaust pressure on an upstream side of the turbine exceeds a specified value, wherein
in the cases where the speed increase rate exceeds the threshold value and the exhaust pressure on the upstream side of the turbine exceeds the specified value, the target valve opening degree setting section changes the closing direction limit value within the specified opening degree range in the opening direction and sets the target valve opening degree of the exhaust flow rate adjusting valve within a changed opening degree range.

4. A control method for an internal combustion engine with a supercharger for driving a turbine by using exhaust gas that flows through an exhaust route of the internal combustion engine and supercharging air that flows through an intake route to the internal combustion engine by a compressor coupled to said turbine, the controller for the internal combustion engine with the supercharger comprising:
setting a target valve opening degree of an exhaust flow rate adjusting valve that adjusts a flow rate of the exhaust gas flowing through the exhaust route within a specified opening degree range on the basis of an operation state of the internal combustion engine;
controlling supercharging pressure that causes the air to be supercharged to the internal combustion engine by driving the exhaust flow rate adjusting valve such that an actual valve opening degree of the exhaust flow rate adjusting valve follows the set target valve opening degree;
determining whether an engine speed increase rate, at which a speed of the internal combustion engine increases, exceeds a threshold value; and
changing a closing direction limit value within the specified opening degree range in an opening direction and setting the target valve opening degree of the exhaust flow rate adjusting valve within a changed opening degree range on the basis of the operation state of the internal combustion engine in the case where the speed increase rate exceeds the threshold value.
